# EUROPEAN PATENT APPLICATION

(11) **EP 2 264 119 A1**
(43) Date of publication of application: **22.12.2010**
(21) Application number: 10250974.2
(22) Date of filing: 25.05.2010
(51) Int. Cl.: C09K 8/04, C09K 8/40, C09K 8/66

(54) **High density phosphate brines and methods for making and using same**

(30) Priority: 28.05.2009 US 473805
(71) Applicant: Clearwater International LLC, Houston, TX 77027 (US)
(72) Inventor: Falana, Olusegun Matthew, San Antonio Texas 78253 (US); Ugwu, Emilia U., Universal City Texas 78148 (US); Zamora, Frank, San Antonio Texas 78232 (US); Gilmer, Arthur T., Spring Texas 77382 (US); Veldman, Raynard, Bellaire Texas 77401 (US)
(74) Representative: Shanks, Andrew

(57) **Abstract**

New heavy phosphate brines are disclosed, where the water soluble phosphate brines include two or more metal phosphate. Methods for making and using the heavy phosphate brines in drilling, completion, and fracturing operations are also disclosed.

## Description

### BACKGROUND OF THE INVENTION

### 1. Field of the Invention

Embodiments of the present invention relate to compositions including a heavy water soluble phosphate brine base fluids for drilling, completing, and/or fracturing of oil and/or gas wells and to method for making and using same.

More particularly, embodiments of the present invention related to compositions including a heavy phosphate brine base fluids for drilling, completing, and/or fracturing of oil and/or gas wells and to method for making and using same, where the heavy phosphate brine base fluid comprises cesium and/or mixed metal phosphate salts and where the fluid has a density at or above about 15 lb/gal.

### 2. Description of the Related Art

Historically, phosphate salts are produced by reacting phosphoric or polyphosphoric acid with metal hydroxides. Prior teaching also includes use of ion exchange resin columns (see U.S. Pat. Nos. 4,935,213 and 3,993,466). While direct neutralization produces brines that might be unsuitable in applications where clear fluids are required, the use of ion exchange columns to clarify the brines is unwarranted in many large scale processes and adds to production cost.

To-date, preparations of high density phosphate brines have been difficult and limited to the production of phosphate brines having densities only up to about 15 lb/gal (Specific Gravity of 1.8). Most, phosphate brines are prepared commercially by the treatment of phosphate rock so called "rock salt" (see S. M. Jasinski; "Phosphate Rock", US Geological Survey Minerals' Yearbook, 2003 and US Pat. No. 3,993,466) or phosphoric acid with alkali metal hydroxides. This process requires ready availability of the afore mentioned materials. However, demand for these reagents for other uses is high. For instance, phosphate salts find applications in pharmaceutical, agricultural and detergent industries. Thus, high demand limits production of high density brines and makes the economics of the neutralization process at best uncertain.

As such, there is need in the art for economical, simple and reproducible method of preparing heavy phosphate brine fluid for use in drilling, completion and fracturing operation in oil and/or gas production from underground formations.

### DEFINITIONS OF THE INVENTION

An under-balanced and/or managed pressure drilling fluid means a drilling fluid having a hydrostatic density (pressure) lower or equal to a formation density (pressure). For example, if a known formation at 10,000 ft (True Vertical Depth - TVD) has a hydrostatic pressure of 5,000 psi or 9.6 lbm/gal, an under-balanced drilling fluid would have a hydrostatic pressure less than or equal to 9.6 lbm/gal. Most under-balanced and/or managed pressure drilling fluids include at least a density reduction additive. Other additive many include a corrosion inhibitor, a pH modifier and a shale inhibitor.

The term "fracturing" refers to the process and methods of breaking down a geological formation, ***i*.*e*.** the rock formation around a well bore, by pumping fluid at very high pressures, in order to increase production rates from a hydrocarbon reservoir. The fracturing methods of this invention use otherwise conventional techniques known in the art.

The term "proppant" refers to a granular substance suspended in the fracturing fluid during the fracturing operation, which serves to keep the formation from closing back down upon itself once the pressure is released. Proppants envisioned by the present invention include, but are not limited to, conventional proppants familiar to those skilled in the art such as sand, 20-40 mesh sand, resin-coated sand, sintered bauxite, glass beads, and similar materials.

The term "ppg" means pounds per gallon (lb/gal) and is a measure of density.

### SUMMARY OF THE INVENTION

Embodiments of this invention provide a drilling fluid composition including a heavy water soluble phosphate brine base fluid, where the heavy phosphate brine base fluid comprises cesium and/or mixed metal phosphate salts and where the fluid has a density at or above about 15 lb/gal.

Embodiments of this invention provide a completion fluid composition including a heavy phosphate brine base fluid, where the heavy phosphate brine base fluid comprises cesium and/or mixed metal phosphate salts and where the fluid has a density at or above about 15 lb/gal.

Embodiments of this invention provide a fracturing fluid composition including a heavy phosphate brine base fluid, where the heavy phosphate brine base fluid comprises cesium and/or mixed metal phosphate salts and where the fluid has a density at or above about 15 lb/gal.

Embodiments of this invention provide a method for drilling, including drilling an oil and/or gas well with a drilling fluid composition including a heavy phosphate brine base fluid, where the heavy phosphate brine base fluid comprises cesium and/or mixed metal phosphate salts and where the fluid has a density at or above about 15 lb/gal.

Embodiments of this invention provide method for completing an oil and/or gas well including completing an oil and/or gas well with a completion fluid composition including a heavy phosphate brine base fluid, where the heavy phosphate brine base fluid comprises cesium and/or mixed metal phosphate salts and where the fluid has a density at or above about 15 lb/gal.

Embodiments of this invention provide a method for fracturing an oil and/or gas well including fracturing a formation with a fracturing fluid composition including a heavy phosphate brine base fluid, where the heavy phosphate brine base fluid comprises cesium and/or mixed metal phosphate salts and where the fluid has a density at or above about 15 lb/gal.

Embodiments of this invention provide a system for drilling an oil and/or gas well includes supply means adapted to supply a drilling fluid composition including a heavy phosphate brine base fluid, where the heavy phosphate brine base fluid comprises cesium and/or mixed metal phosphate salts and where the fluid has a density at or above about 15 lb/gal to a drill string during drilling operations.

Embodiments of this invention provide system for completing an oil and/or gas well including supply means adapted to supply a completion fluid composition including a heavy phosphate brine base fluid, where the heavy phosphate brine base fluid comprises cesium and/or mixed metal phosphate salts and where the fluid has a density at or above about 15 lb/gal to a completion string during well completion operations.

Embodiments of this invention provide a method for fracturing an oil and/or gas well including supply means adapted to supply a fracturing fluid composition including a heavy phosphate brine base fluid, where the heavy phosphate brine base fluid comprises cesium and/or mixed metal phosphate salts and where the fluid has a density at or above about 15 lb/gal to a fracturing string during formation fracturing.

### DETAILED DESCRIPTION OF THE INVENTION

The inventors have found that heavy phosphate brines can be generated at high neutralization reaction temperatures having densities above about 15 lb/gal. The inventor have found that the neutralization of a hydrogen phosphate with a metal containing base can produce phosphate brines with densities of 18 lb/gal (ppg) or greater depending on the hydrogen phosphate and metal containing base used to prepare the brine. For example, the reaction of potassium monophosphate with cesium hydroxide (CsOH) yields a phosphate brine having a density of about 18 ppg.

Unlike teachings in prior art, this invention offers the flexibility to employ a direct neutralization reaction procedure or "indirect" or displacement reaction procedure to produce homogenous or heterogeneous (mixed) cation brines. The resultant brines are clear, thus making them suitable for wide applications. In certain embodiments, indirect methods are used to preclude reaction run, run away reaction, and other difficulties associated with procedures using a direct neutralization reaction.

The processes of the present invention can be used to prepare heavy brines comprising a mixture of phosphate salts, at high neutralization reaction temperatures with selective use of mono or di-alkali metal hydrogen phosphates. Some mixed cation phosphate compositions are known in the art including ammonium magnesium phosphate (NH₄MgPO₄), sodium aluminum phosphates [NaAl₃H₁₄(PO₄)₈.4H₂O & Na₃Al₂H₁₅(PO₄)₈] (*see, e*.*g*., Kirk-Othmer, Encyclopediea of chemical Technology, 3rd edition, vol 17, p447, 1982), cesium sodium (or potassium) hydrogen phosphates (CsNaHPO₄ or CsKHPO4). However, cesium potassium phosphates have only been prepared on small scale for use as catalysts to effect transformation of organic molecules into lactone (*see, e*.*g*., U.S. Patent No. 5,502,217) or ester (*see, e*.*g*. U.S. Patent No. 6,723,823).

### METHODS FOR USING HEAVY PHOSPHATE BRINE OF THIS INVENTION

### Fracturing

The present invention provides a method for fracturing a formation with a fracturing fluid including a heavy phosphate brine of this invention, where the method includes the step of pumping a fracturing fluid including a proppant into a producing formation at a pressure sufficient to fracture the formation and to enhance productivity, where the proppant props open the formation after fracturing.

The present invention provides a method for fracturing a formation with a fracturing fluid including a heavy phosphate brine of this invention, where the method includes the step of pumping a fracturing fluid including a proppant into a producing formation at a pressure sufficient to fracture the formation and to enhance productivity.

The present invention provides a method for fracturing a formation with a fracturing fluid including a heavy phosphate brine of this invention, where the method includes the step of pumping a fracturing fluid into a producing formation at a pressure sufficient to fracture the formation and to enhance productivity. The method can also include the step of pumping a proppant after fracturing so that the particles prop open the fractures formed in the formation during fracturing.

### Drilling

The present invention provides a method for drilling including the step of while drilling, circulating a drilling fluid, to provide bit lubrication, heat removal and cutting removal, where the drilling fluid includes a heavy phosphate brine of this invention. The method can be operated in over-pressure conditions or under-balanced conditions or under managed pressure conditions. The method is especially well tailored to under-balanced or managed pressure conditions.

### Producing

The present invention provides a method for producing including the step of circulating and/or pumping a fluid into a well on production, where the fluid includes a heavy phosphate brine of this invention.

### SUITABLE REAGENTS

Suitable phosphate sources include, without limitation, phosphoric acid, polyphosphoric acid, mono alkali metal hydrogen phosphates, di alkali metal hydrogen phosphates, mixed di alkali metal hydrogen phosphates and mixtures or combinations thereof. Further, alkaline earth metal hydrogen phosphates are suitable. Exemplary examples include mono lithium hydrogen phosphate, mono hydrogen phosphate, mono potassium hydrogen phosphate, mono rubidium hydrogen phosphate, mono cesium hydrogen phosphate, di-lithium hydrogen phosphate, di-hydrogen phosphate, di-potassium hydrogen phosphate, di-rubidium hydrogen phosphate, di-cesium hydrogen phosphate, magnesium hydrogen phosphateand mixture or combinations thereof.

Suitable bases include, without limitation, alkali metal hydroxides, alkaline earth metal and mixtures or combinations thereof. Exemplary examples include lithium hydroxide, sodium hydroxide, potassium hydroxide, rubidium hydroxide, cesium hydroxide, magnesium hydroxide and mixtures or combinations thereof.

It should be recognized that if one wants to form a mixed phosphate brine, then one would use a suitable hydrogen phosphate and a suitable base. For example, if one wanted to prepare a potassium-cesium mixed phosphate brine, then one could start with a potassium hydrogen phosphate and cesium hydroxide or cesium hydrogen phosphate and potassium hydroxide. One can also start with cesium, potassium hydrogen phosphate and neutralize with either potassium or cesium hydroxide depending on the brine to be produced. It should also be recognized that the phosphate brines can include more than two metals as counterions by using a mixture of hydrogen phosphates and/or a mixture of bases.

### DRILLING AND COMPLETION FLUIDS

The drilling and completion fluids of this invention, while including a heavy phosphate brine as set forth herein can also include other reagents or additives including those set forth below.

### Sulfur Scavenger

Suitable sulfur scavengers for use in this invention include, without limitation, amines, aldehyde-amine adducts, triazines, or the like or mixtures or combinations thereof. Exemplary examples of aldehyde-amine adduct type sulfur scavengers include, without limitation, (1) formaldehyde reaction products with primary amines, secondary amines, tertiary amines, primary diamines, secondary diamines, tertiary diamines, mixed diamines (diamines having mixtures of primary, secondary and tertiary amines), primary polyamines, secondary polyamines, tertiary polyamines, mixed polyamines (polyamines having mixtures of primary, secondary and tertiary amines), monoalkanolamines, dialkanol amines and trialkanol amines; (2) linear or branched alkanal (*i*.*e*., RCHO, where R is a linear or branched alkyl group having between about 1 and about 40 carbon atoms or mixtures of carbon atoms and heteroatoms such as O and/or N) reaction products with primary amines, secondary amines, tertiary amines, primary diamines, secondary diamines, tertiary diamines, mixed diamines (diamines having mixtures of primary, secondary and tertiary amines), primary polyamines, secondary polyamines, tertiary polyamines, mixed polyamines (polyamines having mixtures of primary, secondary and tertiary amines), monoalkanolamines, dialkanol amines and trialkanol amines; (3) aranals (R'CHO, where R' is an aryl group having between about 5 and about 40 carbon atoms and heteroatoms such as O and/or N) reaction products with primary amines, secondary amines, tertiary amines, primary diamines, secondary diamines, tertiary diamines, mixed diamines (diamines having mixtures of primary, secondary and tertiary amines), primary polyamines, secondary polyamines, tertiary polyamines, mixed polyamines (polyamines having mixtures of primary, secondary and tertiary amines), monoalkanolamines, dialkanol amines and trialkanol amines; (4) alkaranals (R"CHO, where R" is an alkylated aryl group having between about 6 and about 60 carbon atoms and heteroatoms such as O and/or N) reaction products with primary amines, secondary amines, tertiary amines, primary diamines, secondary diamines, tertiary diamines, mixed diamines (diamines having mixtures of primary, secondary and tertiary amines), primary polyamines, secondary polyamines, tertiary polyamines, mixed polyamines (polyamines having mixtures of primary, secondary and tertiary amines), monoalkanolamines, dialkanol amines and trialkanol amines; (5) aralkanals (R"'CHO, where R"' is an aryl substituted linear or branched alkyl group having between about 6 and about 60 carbon atoms and heteroatoms such as O and/or N) reaction products with primary amines, secondary amines, tertiary amines, primary diamines, secondary diamines, tertiary diamines, mixed diamines (diamines having mixtures of primary, secondary and tertiary amines), primary polyamines, secondary polyamines, tertiary polyamines, mixed polyamines (polyamines having mixtures of primary, secondary and tertiary amines), monoalkanolamines, dialkanol amines and trialkanol amines, and (6) mixtures or combinations thereof. It should be recognized that under certain reaction conditions, the reaction mixture may include triazines in minor amount or as substantially the only reaction product (greater than 90 wt.% of the product), while under other conditions the reaction product can be monomeric, oligomeric, polymeric, or mixtures or combinations thereof. Other sulfur scavengers are disclosed in WO04/043038, US2003-0089641, GB2397306, United States Patent Application Nos.: 10/754487, 10/839,734, and 10/734600, incorporated herein by reference.

### Shale Inhibitors

Suitable choline salts or 2-hydroxyethyl trimethylammonium salts for use in this invention include, without limitation, choline organic counterion salts, choline inorganic counterion salts, or mixture or combinations thereof. Preferred choline counterion salts of this invention include, without limitation, choline or 2-hydroxyethyl trimethylammonium halide counterion salts, carboxylate counterion salts, nitrogen oxide counterion salts, phosphorus oxide counterion salts, sulfur oxide counterion salts, halogen oxide counterion salts, metal oxide counterion salts, carbon oxide counterion salts, boron oxide counterion salts, perfluoro counterion salts, hydrogen oxide counterion salts or mixtures or combinations thereof. Other examples can be found in United States Patent Application Serial No. 10/999796, incorporated herein by reference.

Exemplary examples of choline halide counterion salts including choline fluoride, choline chloride, choline bromide, choline iodide, or mixtures or combinations thereof.

Suitable choline carboxylate counterion salts include, without limitation, choline carboxylate counterion salts where the carboxylate counterion is of the general formula R¹COO⁻, where R¹ is an alkyl group, alkenyl group, alkynyl group, an aryl group, an alkaryl group, an aralkyl group, alkenylaryl group, aralkenyl group, alkynylaryl group, aralkynyl group hetero atom analogs, where the hetero atom is selected from the group consisting of boron, nitrogen, oxygen, fluorine, phosphorus, sulfur, chlorine, bromine, iodine, and mixture or combinations thereof, or mixtures or combinations thereof. A non-exhaustive list of exemplary examples of choline carboxylate counterion salts include choline formate, choline acetate, choline propanate, choline butanate, cholide pentanate, choline hexanate, choline heptanate, choline octanate, choline nonanate, choline decanate, choline undecanate, choline dodecanate, and choline higher linear carboxylate salts, choline benzoate, choline salicylate, other choline aromatic carboxylate counterion salts, choline stearate, choline oleate, other choline fatty acid counterion salts, choline glyolate, choline lactate, choline hydroxyl acetate, choline citrate, other choline hydroxylated carboxylates counterion salts, choline aconitate, choline cyanurate, choline oxalate, choline tartarate, choline itaconate, other choline di, tri and polycarboxylate counterion salts, choline trichloroacetate, choline trifluoroacetate, other choline halogenated carboxylate counterion salts, or mixture or combinations thereof. Other choline carboxylate counterion salts useful in the drilling fluids of this invention include choline amino acid counterion salts including choline salts of all naturally occurring and synthetic amino acids such as alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, (R)-Boc-4-(4-pyridyl)-β-Homoala-OH purum, (S)-Boc-4-(4-pyridyl)-β-Homoala-OH purum, (R)-Boc-4-trifluoromethyl-β-Homophe-OH purum, (S)-Fmoc-3-trifluoromethyl-β-Homophe-OH purum, (S)-Boc-3-trifluoromethyl-β-Homophe-OH purum, (S)-Boc-2-trifluoromethyl-β-Homophe-OH purum, (S)-Fmoc-4-chloro-β-Homophe-OH purum, (S)-Boc-4-methyl-β-Homophe-OH purum, 4-(Trifluoromethyl)-L-phenylalanine purum, 2-(Trifluoromethyl)-D-phenylalanine purum, 4-(Trifluoromethyl)-D-phenylalanine purum, 3-(2-Pyridyl)-L-alanine purum, 3-(2-Pyridyl)-L-alanine purum, 3-(3-Pyridyl)-L-alanine purum, or mixtures or combinations thereof or mixtures or combinations of these amino acid choline salts with other choline salts. Other preferred carboxylate counterions are counterions formed from a reaction of a carboxylic acid or carboxylate salt with an alkenyl oxide to form a carboxylate polyalkylene oxide alkoxide counterion salt. Preferred alkenyl oxides include ethylene oxide, propylene oxide, butylene oxide, and mixtures and/or combinations thereof.

Exemplary examples of choline nitrogen oxide counterion salts including choline nitrate, choline nitrite, choline NₓO_{y} counterion salts or mixtures or combinations thereof.

Exemplary examples of choline phosphorus oxide counterion salts include choline phosphate, choline phosphite, choline hydrogen phosphate, choline dihydrogen phosphate, choline hydrogen phosphite, choline dihydrogen phosphite, or mixtures or combinations thereof.

Exemplary examples of choline sulfur oxide counterion salts include choline sulfate, choline hydrogen sulfate, choline persulfate, choline alkali metal sulfates, choline alkaline earth metal sulfates, choline sulfonate, choline alkylsulfonates, choline sulfamate (NH₂SO₃⁻), choline taurinate (NH₂CH₂CH₂SO₃⁻), or mixtures or combinations thereof.

Exemplary examples of choline halogen oxide counterion salts including choline chlorate, choline bromate, choline iodate, choline perchlorate, choline perbromate, choline periodate, or mixtures or combinations thereof.

Exemplary examples of choline metal oxide counterion salts including choline dichromate, choline iron citrate, choline iron oxalate, choline iron sulfate, choline tetrathiocyanatodiamminechromate, choline tetrathiomolybdate, or mixtures or combinations thereof.

Exemplary examples of choline carbon oxide counterion salts include choline carbonate, choline bicarbonate, choline alkali carbonates, choline alkaline earth metal carbonates, or mixtures or combinations thereof.

Exemplary examples of choline boron oxide counterion salts including choline borate, tetraphenyl borate, or mixtures or combinations thereof.

Exemplary examples of choline perfluoro counterion salts including choline tetrafluoroborate, choline hexafluoroantimonate, choline heptafluorotantalate(V), choline hexafluorogermanate(IV), choline hexafluorophsophate, choline hexafluorosilicate, choline hexafluorotitanate, choline metavanadate, choline metatungstate, choline molybdate, choline phosphomolybdate, choline trifluoroacetate, choline trifluoromethanesulfonate, or mixtures or combinations thereof.

Exemplary examples of choline hydrogen oxide counterion salts including choline hydroxide, choline peroxide, choline superoxide, mixtures or combinations thereof. hydroxide reacted with: formic acid; acetic acid; phosphoric acid; hydroxy acetic acid; nitric acid; nitrous acid; poly phos; derivatives of P₂O₅; acid;(acid of glyoxal);; sulfuric; all the amino acids (lycine, torine, glycine, *etc*.); NH₂CH₂CH₂SO₃H; sulfamic; idodic;; all the fatty acids; diamethylol proprionic acid; cyclolaucine; phosphorous; boric;; proline; benzoic acid; tertiary chloro acetic; fumeric; salicylic; choline derivatives; ethylene oxide; propylene oxide; butylene oxide; epilene chloro hydrine; ethylene chloro hydrine; choline carbonate; and choline peroxide.

One preferred class of choline salts of this invention is given by the general formula (I):

HOCH₂CH₂N⁺(CH₃)₃ · R¹COO⁻ (I)

where R¹ is an alkyl group, alkenyl group, alkynyl group, an aryl group, an alkaryl group, an aralkyl group, alkenylaryl group, aralkenyl group, alkynylaryl group, aralkynyl group hetero atom analogs, where the hetero atom is selected from the group consisting of boron, nitrogen, oxygen, fluorine, phosphorus, sulfur, chlorine, bromine, iodine, and mixture or combinations thereof, or mixtures or combinations thereof.

While choline halides have been used in drilling, completion and production
operations under over-balanced conditions, choline carboxylate salts have not been used in such applications. These new anti-swell additives should enjoy broad utility in all conventional drilling, completion and/or production fluids.

### pH Modifiers

Suitable pH modifiers for use in this invention include, without limitation, alkali hydroxides, alkali carbonates, alkali bicarbonates, alkaline earth metal hydroxides, alkaline earth metal carbonates, alkaline earth metal bicarbonates and mixtures or combinations thereof. Preferred pH modifiers include NaOH, KOH, Ca(OH)₂, CaO, Na₂CO₃, KHCO₃, K₂CO₃, NaHCO₃, MgO, Mg(OH)₂ and combination thereof.

### Weight Reducing Agents and Foamers

The weight reducing agents and foamers use for this invention include, without limitation, any weight reducing agent or foamer currently available or that will be come available during the life time of this patent application or patent maturing therefrom. Preferred foamers are those available from Weatherford International, Inc. facility in Elmendorf, Texas. Generally, the foamers used in this invention can include alone or in any combination an anionic surfactant, a cationic surfactant, a non-ionic surfactant and a zwitterionic surfactant. Preferred foaming agents includes those disclosed in co-pending United States Patent Application Serial No. 10/839,734 filed 05/05/04.

### Other Corrosion Inhibitors

Suitable corrosion inhibitor for use in this invention include, without limitation: quaternary ammonium salts e.g., chloride, bromides, iodides, dimethylsulfates, diethylsulfates, nitrites, hydroxides, alkoxides, or the like, or mixtures or combinations thereof; salts of nitrogen bases; or mixtures or combinations thereof. Exemplary quaternary ammonium salts include, without limitation, quaternary ammonium salts from an amine and a quaternarization agent, e.g., alkylchlorides, alkylbromide, alkyl iodides, alkyl sulfates such as dimethyl sulfate, diethyl sulfate, *etc*., dihalogenated alkanes such as dichloroethane, dichloropropane, dichloroethyl ether, epichlorohydrin adducts of alcohols, ethoxylates, or the like; or mixtures or combinations thereof and an amine agent, *e*.*g*., alkylpyridines, especially, highly alkylated alkylpyridines, alkyl quinolines, C6 to C24 synthetic tertiary amines, amines derived from natural products such as coconuts, or the like, dialkylsubstituted methyl amines, amines derived from the reaction of fatty acids or oils and polyamines, amidoimidazolines of DETA and fatty acids, imidazolines of ethylenediamine, imidazolines of diaminocyclohexane, imidazolines of aminoethylethylenediamine, pyrimidine of propane diamine and alkylated propene diamine, oxyalkylated mono and polyamines sufficient to convert all labile hydrogen atoms in the amines to oxygen containing groups, or the like or mixtures or combinations thereof. Exemplary examples of salts of nitrogen bases, include, without limitation, salts of nitrogen bases derived from a salt, *e*.*g*.: C1 to C8 monocarboxylic acids such as formic acid, acetic acid, propanoic acid, butanoic acid, pentanoic acid, hexanoic acid, heptanoic acid, octanoic acid, 2-ethylhexanoic acid, or the like; C2 to C12 dicarboxylic acids, C2 to C 12 unsaturated carboxylic acids and anhydrides, or the like; polyacids such as diglycolic acid, aspartic acid, citric acid, or the like; hydroxy acids such as lactic acid, itaconic acid, or the like; aryl and hydroxy aryl acids; naturally or synthetic amino acids; thioacids such as thioglycolic acid (TGA); free acid forms of phosphoric acid derivatives of glycol, ethoxylates, ethoxylated amine, or the like, and aminosulfonic acids; or mixtures or combinations thereof and an amine, *e*.*g*.: high molecular weight fatty acid amines such as cocoamine, tallow amines, or the like; oxyalkylated fatty acid amines; high molecular weight fatty acid polyamines (di, tri, tetra, or higher); oxyalkylated fatty acid polyamines; amino amides such as reaction products of carboxylic acid with polyamines where the equivalents of carboxylic acid is less than the equivalents of reactive amines and oxyalkylated derivatives thereof; fatty acid pyrimidines; monoimidazolines of EDA, DETA or higher ethylene amines, hexamethylene diamine (HMDA), tetramethylenediamine (TMDA), and higher analogs thereof; bisimidazolines, imidazolines of mono and polyorganic acids; oxazolines derived from monoethanol amine and fatty acids or oils, fatty acid ether amines, mono and bis amides of aminoethylpiperazine; GAA and TGA salts of the reaction products of crude tall oil or distilled tall oil with diethylene triamine; GAA and TGA salts of reaction products of dimer acids with mixtures of poly amines such as TMDA, HMDA and 1,2-diaminocyclohexane; TGA salt of imidazoline derived from DETA with tall oil fatty acids or soy bean oil, canola oil, or the like; or mixtures or combinations thereof.

### Other Additives

The drilling fluids of this invention can also include other additives as well such as scale inhibitors, carbon dioxide control additives, paraffin control additives, oxygen control additives, or other additives.

### Scale Control

Suitable additives for Scale Control and useful in the compositions of this invention include, without limitation: Chelating agents, *e*.*g*., Na, K or NH+4 salts of EDTA; Na, K or NH+4 salts of NTA; Na, K or NH+4 salts of Erythorbic acid; Na, K or NH+4 salts of thioglycolic acid (TGA); Na, K or NH+4 salts of Hydroxy acetic acid; Na, K or NH+4 salts of Citric acid; Na, K or NH+4 salts of Tartaric acid or other similar salts or mixtures or combinations thereof. Suitable additives that work on threshold effects, sequestrants, include, without limitation: Phosphates, *e*.*g*., sodium hexametaphosphate, linear phosphate salts, salts of polyphosphoric acid, Phosphonates. *e*.*g*., nonionic such as HEDP (hydroxythylidene diphosphoric acid), PBTC (phosphoisobutane, tricarboxylic acid), Amino phosphonates of: MEA (monoethanolamine), NH₃, EDA (ethylene diamine), Bishydroxyethylene diamine, Bisaminoethylether, DETA (diethylenetriamine), HMDA (hexamethylene diamine), Hyper homologues and isomers of HMDA, Polyamines of EDA and DETA, Diglycolamine and homologues, or similar polyamines or mixtures or combinations thereof; Phosphate esters, *e*.*g*., polyphosphoric acid esters or phosphorus pentoxide (P₂O₅) esters of: alkanol amines such as MEA, DEA, triethanol amine (TEA), Bishydroxyethylethylene diamine; ethoxylated alcohols, glycerin, Tris & Tetra hydroxy amines; ethoxylated alkyl phenols (limited use due to toxicity problems), Ethoxylated amines such as monoamines such as MDEA and higher amines from 2 to 24 carbons atoms, diamines 2 to 24 carbon atoms, or the like; Polymers, *e*.*g*., homopolymers of aspartic acid, soluble homopolymers of acrylic acid, copolymers of acrylic acid and methacrylic acid, terpolymers of acylates, AMPS, *etc*., hydrolyzed polyacrylamides, poly malic anhydride (PMA); or the like; or mixtures or combinations thereof.

### Carbon Dioxide Neutralization

Suitable additives for CO₂ neutralization and for use in the compositions of this invention include, without limitation, MEA, DEA, isopropylamine, cyclohexylamine, morpholine, diamines, dimethylaminopropylamine (DMAPA), ethylene diamine, methoxy proplyamine (MOPA), dimethylethanol amine, methyldiethanolamine (MDEA) & oligomers, imidazolines of EDA and homologues and higher adducts, imidazolines of aminoethylethanolamine (AEEA), aminoethylpiperazine, aminoethylethanol amine, di-isopropanol amine, DOW AMP-90™, Angus AMP-95, dialkylamines (of methyl, ethyl, isopropyl), mono alkylamines (methyl, ethyl, isopropyl), trialkyl amines (methyl, ethyl, isopropyl), bishydroxyethylethylene diamine (THEED), or the like or mixtures or combinations thereof.

### Paraffin Control

Suitable additives for Paraffin Removal, Dispersion, and/or paraffin Crystal Distribution include, without limitation: Cellosolves available from DOW Chemicals Company; Cellosolve acetates; Ketones; Acetate and Formate salts and esters; surfactants composed of ethoxylated or propoxylated alcohols, alkyl phenols, and/or amines; methylesters such as coconate, laurate, soyate or other naturally occurring methylesters of fatty acids; sulfonated methylesters such as sulfonated coconate, sulfonated laurate, sulfonated soyate or other sulfonated naturally occurring methylesters of fatty acids; low molecular weight quaternary ammonium chlorides of coconut oils soy oils or C10 to C24 amines or monohalogenated alkyl and aryl chlorides; quanternary ammonium salts composed of disubstituted (*e*.*g*., dicoco, *etc*.) and lower molecular weight halogenated alkyl and/or aryl chlorides; gemini quaternary salts of dialkyl (methyl, ethyl, propyl, mixed, *etc*.) tertiary amines and dihalogenated ethanes, propanes, *etc.* or dihalogenated ethers such as dichloroethyl ether (DCEE), or the like; gemini quaternary salts of alkyl amines or amidopropyl amines, such as cocoamidopropyldimethyl, bis quaternary ammonium salts of DCEE; or mixtures or combinations thereof. Suitable alcohols used in preparation of the surfactants include, without limitation, linear or branched alcohols, specially mixtures of alcohols reacted with ethylene oxide, propylene oxide or higher alkyleneoxide, where the resulting surfactants have a range of HLBs. Suitable alkylphenols used in preparation of the surfactants include, without limitation, nonylphenol, decylphenol, dodecylphenol or other alkylphenols where the alkyl group has between about 4 and about 30 carbon atoms. Suitable amines used in preparation of the surfactants include, without limitation, ethylene diamine (EDA), diethylenetriamine (DETA), or other polyamines. Exemplary examples include Quadrols, Tetrols, Pentrols available from BASF. Suitable alkanolamines include, without limitation, monoethanolamine (MEA), diethanolamine (DEA), reactions products of MEA and/or DEA with coconut oils and acids and/or N-methyl-2-pyrrolidone is oil solubility is desired.

### Oxygen Control

The introduction of water downhole often is accompanied by an increase in the oxygen content of downhole fluids due to oxygen dissolved in the introduced water. Thus, the materials introduced downhole must work in oxygen environments or must work sufficiently well until the oxygen content has been depleted by natural reactions. For system that cannot tolerate oxygen, then oxygen must be removed or controlled in any material introduced downhole. The problem is exacerbated during the winter when the injected materials include winterizers such as water, alcohols, glycols, Cellosolves, formates, acetates, or the like and because oxygen solubility is higher to a range of about 14-15 ppm in very cold water. Oxygen can also increase corrosion and scaling. In CCT (capillary coiled tubing) applications using dilute solutions, the injected solutions result in injecting an oxidizing environment (O₂) into a reducing environment (CO₂, H₂S, organic acids, *etc*.).

Options for controlling oxygen content includes: (1) de-aeration of the fluid prior to downhole injection, (2) addition of normal sulfides to produce sulfur oxides, but such sulfur oxides can accelerate acid attack on metal surfaces, (3) addition of erythorbates, ascorbates, diethylhydroxyamine or other oxygen reactive compounds that are added to the fluid prior to downhole injection; and (4) addition of corrosion inhibitors or metal passivation agents such as potassium (alkali) salts of esters of glycols, polyhydric alcohol ethyloxylates or other similar corrosion inhibitors. Exemplary examples oxygen and corrosion inhibiting agents include mixtures of tetramethylene diamines, hexamethylene diamines, 1,2-diaminecyclohexane, amine heads, or reaction products of such amines with partial molar equivalents of aldehydes. Other oxygen control agents include salicylic and benzoic amides of polyamines, used especially in alkaline conditions, short chain acetylene diols or similar compounds, phosphate esters, borate glycerols, urea and thiourea salts of bisoxalidines or other compound that either absorb oxygen, react with oxygen or otherwise reduce or eliminate oxygen.

### FRACTURING FLUIDS

Generally, a hydraulic fracturing treatment involves pumping a proppant-free viscous fluid, or pad, usually water with some fluid additives to generate high viscosity, into a well faster than the fluid can escape into the formation so that the pressure rises and the rock breaks, creating artificial fractures and/or enlarging existing fractures. After fracturing the formation, a propping agent, generally a solid material such as sand is added to the fluid to form a slurry that is pumped into the newly formed fractures and/or enlarged fractures in the formation to prevent them from closing when the pumping pressure is released. The proppant transport ability of a base fluid depends on the type of viscosifying additives added to the water base. Alternatively, the proppant can be present in the fracturing fluid from the outset.

Water-base fracturing fluids with water-soluble polymers added to make a viscosified solution are widely used in the art of fracturing. Since the late 1950s, more than half of the fracturing treatments are conducted with fluids comprising guar gums, high-molecular weight polysaccharides composed of mannose and galactose sugars, or guar derivatives such as hydropropyl guar (HPG), carboxymethyl guar (CMG). carboxymethylhydropropyl guar (CMHPG). Crosslinking agents based on boron, titanium, zirconium or aluminum complexes are typically used to increase the effective molecular weight of the polymer and make them better suited for use in high-temperature wells.

Polymer-free, water-base fracturing fluids can be obtained using viscoelastic surfactants. These fluids are normally prepared by mixing in appropriate amounts of suitable surfactants such as anionic, cationic, nonionic and zwitterionic surfactants. The viscosity of viscoelastic surfactant fluids is attributed to the three dimensional structure formed by the components in the fluids. When the concentration of surfactants in a viscoelastic fluid significantly exceeds a critical concentration, and in most cases in the presence of an electrolyte, surfactant molecules aggregate into species such as micelles, which can interact to form a network exhibiting viscous and elastic behavior.

The proppant type can be sand, intermediate strength ceramic proppants (available from Carbo Ceramics, Norton Proppants, *etc*.), sintered bauxites and other materials known to the industry. Any of these base propping agents can further be coated with a resin (available from Santrol, a Division of Fairmount Industries, Borden Chemical, etc.) to potentially improve the clustering ability of the proppant. In addition, the proppant can be coated with resin or a proppant flowback control agent such as fibers for instance can be simultaneously pumped. By selecting proppants having a contrast in one of such properties such as density, size and concentrations, different settling rates will be achieved.

In order for the treatment to be successful, it is preferred that the fluid viscosity eventually diminish to levels approaching that of water after the proppant is placed. This allows a portion of the treating fluid to be recovered without producing excessive amounts of proppant after the well is opened and returned to production. The recovery of the fracturing fluid is accomplished by reducing the viscosity of the fluid to a lower value such that it flows naturally from the formation under the influence of formation fluids. This viscosity reduction or conversion is referred to as "breaking" and can be accomplished by incorporating chemical agents, referred to as "breakers," into the initial gel.

In addition to the importance of providing a breaking mechanism for the gelled fluid to facilitate recovery of the fluid and to resume production, the timing of the break is also of great importance. Gels which break prematurely can cause suspended proppant material to settle out of the gel before being introduced a sufficient distance into the produced fracture. Premature breaking can also lead to a premature reduction in the fluid viscosity, resulting in a less than desirable fracture width in the formation causing excessive injection pressures and premature termination of the treatment.

Suitable solvents fore use in this invention include, without limitation, water. The solvent may be an aqueous potassium chloride solution.

Suitable inorganic breaking agents include, without limitation, a metal-based oxidizing agent, such as an alkaline earth metal or a transition metal; magnesium peroxide, calcium peroxide, or zinc peroxide.

Suitable ester compounds include, without limitation, an ester of a polycarboxylic acid, e.g., an ester of oxalate, citrate, or ethylene diamine tetraacetate. Ester compound having hydroxyl groups can also be acetylated, e.g., acetylated citric acid to form acetyl triethyl citrate.

Suitable hydratable polymers that may be used in embodiments of the invention include any of the hydratable polysaccharides which are capable of forming a gel in the presence of a crosslinking agent. For instance, suitable hydratable polysaccharides include, but are not limited to, galactomannan gums, glucomannan gums, guars, derived guars, and cellulose derivatives. Specific examples are guar gum, guar gum derivatives, locust bean gum, Karaya gum, carboxymethyl cellulose, carboxymethyl hydroxyethyl cellulose, and hydroxyethyl cellulose. Presently preferred gelling agents include, but are not limited to, guar gums, hydroxypropyl guar, carboxymethyl hydroxypropyl guar, carboxymethyl guar, and carboxymethyl hydroxyethyl cellulose. Suitable hydratable polymers may also include synthetic polymers, such as polyvinyl alcohol, polyacrylamides, poly-2-amino-2-methyl propane sulfonic acid, and various other synthetic polymers and copolymers. Other suitable polymers are known to those skilled in the art.

The hydratable polymer may be present in the fluid in concentrations ranging from about 0.10% to about 5.0% by weight of the aqueous fluid. In certain embodiment, a range for the hydratable polymer is about 0.20% to about 0.80% by weight.

A suitable crosslinking agent can be any compound that increases the viscosity of the fluid by chemical crosslinking, physical crosslinking, or any other mechanisms. For example, the gellation of a hydratable polymer can be achieved by crosslinking the polymer with metal ions including boron, zirconium, and titanium containing compounds, or mixtures thereof. One class of suitable crosslinking agents is organotitanates. Another class of suitable crosslinking agents is borates as described, for example, in U.S. Pat. No. 4,514,309. The selection of an appropriate crosslinking agent depends upon the type of treatment to be performed and the hydratable polymer to be used. The amount of the crosslinking agent used also depends upon the well conditions and the type of treatment to be effected, but is generally in the range of from about 10 ppm to about 1000 ppm of metal ion of the crosslinking agent in the hydratable polymer fluid. In some applications, the aqueous polymer solution is crosslinked immediately upon addition of the crosslinking agent to form a highly viscous gel. In other applications, the reaction of the crosslinking agent can be retarded so that viscous gel formation does not occur until the desired time.

It should be understood that the above-described method is only one way to carry out embodiments of the invention. The following U.S. patents disclose various techniques for conducting hydraulic fracturing which may be employed in embodiments of the invention with or without modifications: U.S. Pat. Nos. 6,793,018; 6,756,345; 6,169,058; 6,135,205; 6,123,394; 6,016,871; 5,755,286; 5,722,490; 5,711,396; 5,551,516; 5,497,831; 5,488,083; 5,482,116; 5,472,049; 5,411,091; 5,402,846; 5,392,195; 5,363,919; 5,228,510; 5,224,546; 5,074,359; 5,024,276; 5,005,645; 4,938,286; 4,926,940; 4,892,147; 4,869,322; 4,852,650; 4,848,468; 4,846,277; 4,830,106; 4,817,717; 4,779,680; 4,479,041; 4,739,834; 4,724,905; 4,718,490; 4,714,115; 4,705,113; 4,660,643; 4,657,081; 4,623,021; 4,549,608; 4,541,935; 4,378,845; 4,067,389; 4,007,792; 3,965,982; 3,960,736; and 3,933,205, (incorporated herein by reference by action of the last paragraph of the disclosure prior to the claims).

The liquid carrier can generally be any liquid carrier suitable for use in oil and gas producing wells. A presently preferred liquid carrier is water. The liquid carrier can comprise water, can consist essentially of water, or can consist of water. Water will typically be a major component by weight of the fluid. The water can be potable or non-potable water. The water can be brackish or contain other materials typical of sources of water found in or near oil fields. For example, it is possible to use fresh water, brine, or even water to which any salt, such as an alkali metal or alkali earth metal salt (NaCO.sub.3, NaCl, KCl, etc.) has been added. The liquid carrier is preferably present in an amount of at least about 80% by weight. Specific examples of the amount of liquid carrier include 80%, 85%, 90%, and 95% by weight.

All the fracturing fluids described above are described herein in relationship to the sole use or combined use of a microbial based viscosity breaking composition, apparatus or method of this invention. Of course, the microbial based viscosity breaking composition, apparatus or method of this invention can be used in conjunction or combinations of other gelling and breaking compositions to achieve a desired fracturing and breaking profile (viscosity versus time profile).

### EXPERIMENTS OF THE INVENTION

### COMPARATIVE EXAMPLE 1

This example illustrates the preparation of a 14.5 ppg (Specific Gravity 1.74) phosphate brine.

328.53 g dipotassium hydrogen phosphate (DHP) and 200 g distilled water were added to a 1L beaker. The mixture was stirred at ambient conditions to give 500 mL of a clear phosphate brine having a pH of 11, a pour point of -43° C or -45.4°F, a density of 14.5 ppg, and a Specific Gravity of 1.74.

### EXAMPLE 1

This example illustrates the preparation of a potassium/cesium phosphate brine having a density of 18 ppg and a specific gravity of 2.165.

3 mL of distilled water were added to a mixture of 5.22 g of DHP and 5.04 g of cesium hydroxide monohydrate to give a warm solution having a temperature of 45° C or 113°F. A clear mixed phosphate brine solution was obtained upon stirring for 20 minutes. The mixed phosphate brine had a density of 18 ppg and a Specific Gravity of 2.165.

### EXAMPLE 2

This example illustrates the preparation of another potassium/cesium phosphate brine having a density of 17.04 ppg and a specific gravity of 2.045.

37.1 g of distilled water were added to 69.67 g DHP and 67.17 g of cesium hydroxide monohydrate to give a warm solution having a temperature of 75° C. The solution was then heated to 110° C (230° F) to afford a phosphate brine having a pour point of - 26° C (-14.8° F), density of 17.04 ppg and a Specific Gravity of 2.045.

### EXAMPLE 3

This example illustrates the preparation of another potassium/cesium phosphate brine having a density of 20.75 ppg and a specific gravity of 2.49.

134.38 g cesium hydroxide monohydrate were added to a solution of 54.44 g of DHP in 31 g of distilled water. The temperature of the solution rose to 112° C (233.6° F) above the boiling point of water. The solution was maintained at 100° C for 5 minutes. 5 mL of distilled water were added and the solution stirred until clear. The phosphate brine had a pour point of -1° C (30.2 °F), a density of 20.75 ppg and a Specific Gravity of 2.49.

### EXAMPLE 4

This example illustrates the preparation of a monocation cesium phosphate brine having a density of 23.79 ppg and a specific gravity of 2.86.

In a clean dry glass flask equipped with a magnetic stirrer, a thermometer and stirring bar, polyphosphoric acid (14.27g) was mixed with CSOH·H₂O (34.04g) and 13.2g of water. There was an immediate exotherm and temperature reached about 160°C. Upon cooling a clear cesium phosphate brine, density, 23.79 ppg was obtained.

All references cited herein are incorporated by reference. Although the invention has been disclosed with reference to its preferred embodiments, from reading this description those of skill in the art may appreciate changes and modification that may be made which do not depart from the scope and spirit of the invention as described above and claimed hereafter.

## Claims

1. A well completion fluid composition for use in well completion or servicing operations comprising:
a phosphate brine having a density of greater than 15 pounds per gallon (ppg).

2. A method for completing or working over of a well comprising:
completing or reworking the well in the presence of a completion fluid composition including a phosphate brine having a density greater than about 15 pounds per gallon (ppg).

3. The composition of claim 1 or the method of claim 2, wherein the density is greater than or equal to 17 ppg.

4. The composition of claim 1 or the method of claim 2, wherein the density is greater than or equal to 18 ppg.

5. The composition of claim 1 or the method of claim 2, wherein the density is greater than or equal to 20 ppg.

6. The composition of claim 1, 3, 4 or 5 or the method of claim 2, 3, 4 or 5, where the phosphate brine comprises a cesium phosphate brine, a mixed, metal phosphate brine or a mixture thereof.

7. The composition or method of claim 6, wherein the mixed metals are selected from the group consisting of alkali metals, alkaline earth metals, and mixtures or combinations thereof.

8. The composition or method of claim 7, wherein the mixed metals are alkali metals.

9. The composition or method of claim 8, where in the mixed metals are sodium, potassium, rubidium, and/or cesium.

10. The composition or method of claim 6, where in the metals are cesium and potassium and cesium.

11. The method of claim 9, wherein the mixed metals are potassium and cesium.
